# EUROPEAN PATENT SPECIFICATION

(11) **EP 3 975 667 B1**
(45) Date of publication and mention of the grant of the patent: **07.02.2024**
(21) Application number: 20211190.2
(22) Date of filing: 02.12.2020
(51) Int. Cl.: H05B 47/10, G02F 1/1333, G06F 3/041, G06F 3/044

(54) **TOUCH DIMMING DEVICE AND TOUCH DIMMING METHOD**
GERÄT UND VERFAHREN FÜR BERÜHRUNGSDIMMEN
DISPOSITIF DE GRADATION TACTILE ET PROCÉDÉ DE GRADATION TACTILE

(30) Priority: 28.09.2020 CN 202011039308
(43) Date of publication of application: 30.03.2022
(73) Proprietor: TPK Touch Solutions (Xiamen) Inc., Xiamen, Fujian 361006 (CN)
(72) Inventor: CHUANG, Chih-Cheng, Zhubei City, Hsinchu County 302 (TW); LIN, Shang-Yu, Zhubei City, Hsinchu County 302 (TW); CHENG, Tai-Shih, Taipei City 100 (TW)
(74) Representative: Goddar, Heinz J.

(56) References cited:
- US-A- 5 929 834

## Description

### BACKGROUND

### Technical Field

The present invention relates to a touch dimming device, in particular to a device configured to electrically change the light transmittance and that has a touch function.

### Description of Related Art

The transparent display industry is one of many rapidly developing industries in recent years, and transparent displays are widely used in many fields, such as monitor systems, vehicle systems, augmented reality/visual reality (AR/VR) devices, and projection devices. Due to the increasing demand for transparent displays in the market, the combination of transparent displays with other devices has gradually attracted attention. However, when the transparent display is combined with other devices, balancing the cost, volume, and performance of the combined device is a major issue at present.

US 5 929 834 A discloses a touch dimming device according to the preamble of claim **1** and a touch dimming method according to the preamble of claim 8.

### SUMMARY

One aspect of the present invention is a touch dimming device according to claim 1.

Another aspect of the present invention is a touch dimming method according to claim 8.

Preferred embodiments of the invention are defined in the dependent claims.

It is to be understood that both the foregoing general description and the following detailed description are by way of examples and are intended to provide further explanation of the invention as claimed.

### BRIEF DESCRIPTION OF THE DRAWINGS

The present invention can be more fully understood by reading the following detailed description of the embodiments, with reference made to the accompanying drawings as follows.
FIG. 1 is a schematic diagram of a touch dimming device in some embodiments of the present invention.
FIG. 2A is a waveform of the touch dimming device in some embodiments of the present invention.
FIG. 2B is waveform of a scanning signal in some embodiments of the present invention.
FIG. 3 is a waveform of the touch dimming device in some embodiments of the present invention.
FIG. 4 is a waveform of the touch dimming device in some examples not corresponding to the claimed subject-matter but useful for the understanding thereof.
FIG. 5 is a waveform of the touch dimming device in some examples not corresponding to the claimed subject-matter but useful for the understanding thereof.
FIG. 6 is a flowchart diagram of a touch dimming method in some examples not corresponding to the claimed subject-matter but useful for the understanding thereof.
FIG. 7 is a schematic diagram of a touch dimming device in some embodiments of the present invention.

### DETAILED DESCRIPTION

Although embodiments are described below in detail with the accompanying drawings, the embodiments are not provided to limit the scope of the present invention. Moreover, the operation of the described structure is not for limiting the order of implementation. Any device with equivalent functions that is produced from a structure formed by a recombination of elements is covered by the scope of the present invention. Drawings are for the purpose of illustration only and are not plotted in accordance with the original size.

It will be understood that when an element is referred to as being "connected to" or "coupled to" another element, it can be directly connected or coupled to the other element or intervening elements may be present. In contrast, when an element is referred to as being "directly connected" or "directly coupled" another element, there are no intervening elements present. As used herein, the term "and/or" includes any and all combinations of one or more of the associated listed items.

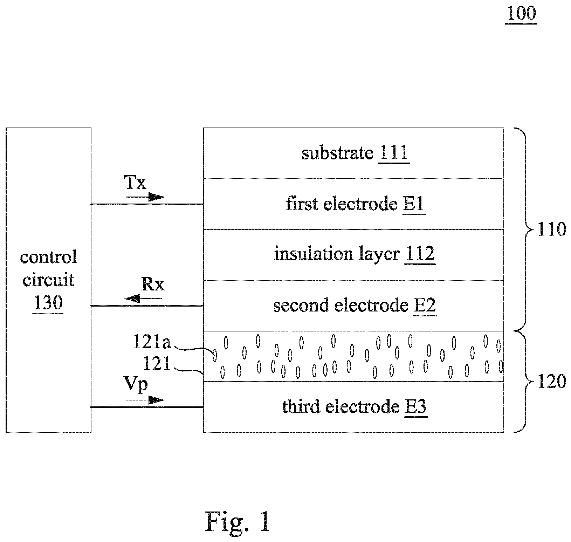

FIG. 1 is a schematic diagram of a touch dimming device 100 in some embodiments of the present invention. The touch dimming device 100 includes a touch panel 110 and an active color changing film 120. The touch panel 110 includes a first electrode E1 and a second electrode E2, so that the touch panel 110 is configured to have a coupling capacitance between the first electrode E1 and the second electrode E2 to perform touch detection.

Specifically, the first electrode E1 (or the second electrode E2) includes multiple sensing electrodes. A predetermined interval is formed between the sensing electrodes to detect the touch of a hand of a user and to identify the corresponding coordinates on the touch panel 110 corresponding to the touch. The structure of the touch panel 110 is not limited to that shown in FIG. 1. Since those skilled in the art can understand the structure and operation of the touch panel 110, it will not be repeated here.

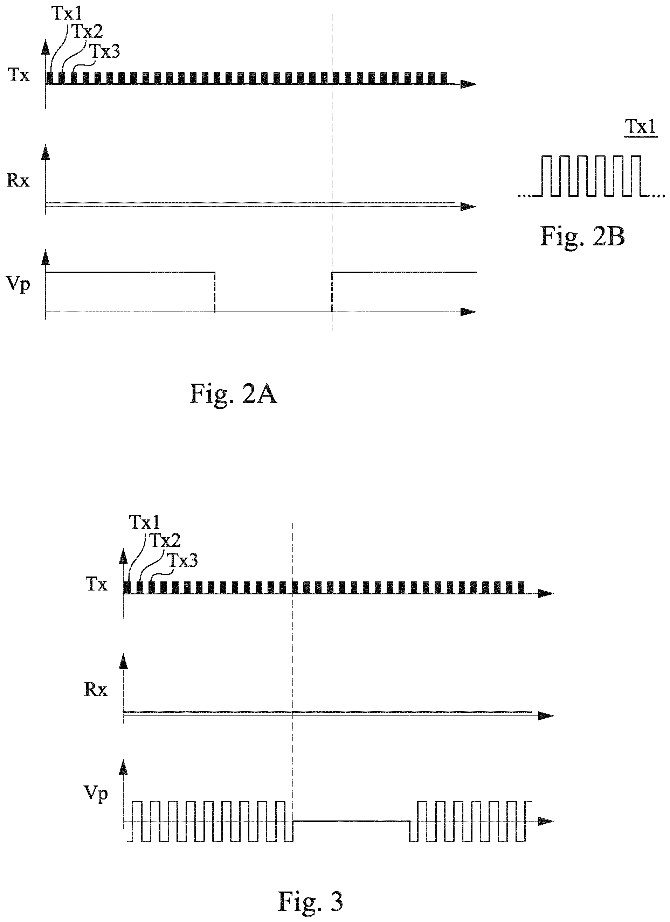

FIG. 2A is a waveform of the touch dimming device 100 in some embodiments of the present invention. In one embodiment, the first electrode E1 is configured to receive a driving voltage Tx (e.g., 3V-40V), and the second electrode E2 is configured to receive a sensing voltage Rx (e.g., 1V-3V). The driving voltage Tx includes multiple scanning signals Tx1, Tx2, and Tx3. If each of the scanning signals Tx1, Tx2, and Tx3 is regard as a pulse, the frequency of the driving voltage Tx is between 30 Hz and 1000 Hz. In some embodiments, the frequency of the driving voltage Tx is between 100 Hz and 150 Hz. The sensing voltage Rx is maintained at a low potential in the touch panel 110, and a voltage value of the sensing voltage Rx can be between 1V-3V.

In addition, referring to FIG. 2B, in one embodiment, each of the scanning signals Tx1, Tx2, and Tx3 includes multiple pulse waves. The frequency of these pulse waves is between 10,000 Hz and 500,000 Hz. That is, the frequency of each of the scanning signals Tx1, Tx2, and Tx3 is between 10,000 Hz and 500,000 Hz.

As shown in FIG. 1, the active color changing film 120 includes a third electrode E3 and a polymer layer 121. The polymer layer 121 is arranged between the second electrode E2 and the third electrode E3 and is configured to change the light transmittance of the active color changing film 120 according to a voltage difference between the second electrode E2 and the third electrode E3. In some embodiments, the active color changing film 120 receives a dimming voltage Vp through the third electrode E3. The active color changing film 120 is further configured to drive and change a direction of the liquid crystal particles 121a of the polymer layer 121 according to the voltage difference between the dimming voltage Vp and the sensing voltage Rx, so that the light transmittance of the active color changing film 120 will be changed.

As shown in the figure, the touch panel 110 and the active color changing film 120 share the second electrode E2. The touch panel 110 performs touch detection according to the coupling capacitance between the first electrode E1 and the second electrode E2. The active color changing film 120 is driven according to the voltage difference between the dimming voltage Vp and the sensing voltage Rx, thereby changing the light transmittance of the active color changing film 120. In the present invention, since the touch panel 110 and the active color changing film 120 share the second electrode E2, the overall volume of the touch dimming device 100 can be reduced.

In addition, in some embodiments, the voltage value of the driving voltage Tx is between 3V-40V. The dimming voltage Vp is between 30V-60V. The voltage value of the dimming voltage Vp is much greater than the voltage value of the driving voltage Tx. In other embodiments, the ratio of the voltage value of the dimming voltage Vp to the voltage value of the driving voltage Tx may be between 1.2-20 (e.g., the dimming voltage Vp is 40V, the driving voltage Tx is 33.3V, or the dimming voltage Vp is 60V, and the driving voltage Tx is 3V). In the case where the voltage value of the dimming voltage Vp and the voltage value of the driving voltage Tx have a significant difference, the driving voltage Tx will not affect the voltage difference on both sides of the active color changing film 120 (i.e., the voltage difference between the second electrode E2 and the third electrode E3), so there is no flicker phenomenon. Alternatively stated, the driving of the active color changing film 120 is not interfered with by the driving voltage Tx.

Specifically, the touch panel 110 further includes a substrate 111 and an insulation layer 112. The substrate 111 is made of a transparent material, and the insulation layer 112 is arranged between the first electrode E1 and the second electrode E2 to form the coupling capacitor (including the first electrode E1, the insulation layer 112, and the second electrode E2).

According to the invention, the touch dimming device 100 further includes a control circuit 130. The control circuit 130 is electrically connected to the touch panel 110 and the active color changing film 120. The control circuit 130 is configured to provide the driving voltage Tx and the dimming voltage Vp and is configured to receive the sensing voltage Rx. The control circuit 130 is configured to perform touch detection according to the change of the sensing voltage Rx and to adjust the dimming voltage Vp to control the light transmittance of the active color changing film 120.

In some embodiments, the polymer layer 121 includes multiple liquid crystal particles 121a (e.g., spherical or elliptical particles) and rotates with the voltage difference between the second electrode E2 and the third electrode E3 to adjust the light transmittance of the active color changing film 120. In one embodiment, the liquid crystal particles 121a are dispersed on a polymer film. A polymer matrix in the polymer film is made up of many monomer molecules connected to each other. Each monomer must be able to bond more than two monomer molecules to form a continuous, long chain, and the structures of polymers formed by bonding different monomers are also different. Liquid crystal and unpolymerized polymer monomers are mixed in an appropriate ratio and then triggered by the outside (e.g., light or heat), and the polymer monomers perform polymerization to form the polymer layer 121. In some embodiments, the above structure of the active color changing film 120 can be realized by a Polymer Dispersed Liquid Crystal (PDLC).

In some other embodiments, multiple liquid crystal particles 121a of the polymer layer 121 are distributed in a polymer network structure. That is, the polymer layer 121 can be implemented by a Polymer Network Liquid Crystal (PNLC). Since those skilled in the art can understand the operation principle of PNLC and PDLC, it will not be repeated here.

The active color changing film 120 shown in FIG. 1 is an optical material that changes the light transmittance according to the voltage difference. Since the active color changing film 120 is not used to present images, the active color changing film 120 does not need to include transistor switches in implementation.

Referring to FIG. 1 and FIG. 2A, according to the invention, the touch dimming device 100 operates in a first state and a second state. In the first state, the third electrode E3 receives the dimming voltage Vp, so that the active color changing film 120 maintains a high transmittance (e.g., PDLC), or the active color changing film 120 maintains a low transmittance (e.g., PNLC). In the second state, the third electrode E3 stops receiving the dimming voltage Vp, so that the active color changing film 120 switches and maintains low transmittance (e.g., PDLC), or the active color changing film 120 switches and maintains high transmittance (e.g., PNLC).

In the above embodiments, the dimming voltage Vp is a direct current (DC) signal, but the present invention is not limited to this. Referring to FIG. 3, in some other embodiments, the dimming voltage Vp may be an alternating current (AC) signal, and the peak voltages of the dimming voltage Vp correspond to each other (e.g., the peaks are +30V and -30V) to control the angle of the liquid crystal particles 121a in the polymer layer 121. The peak voltages of the dimming voltage Vp can be between 30V and 60V.

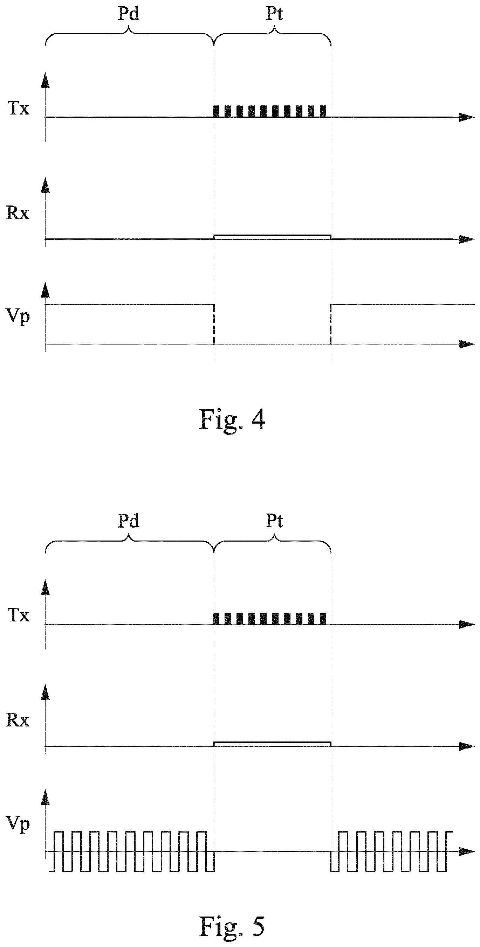

Referring to FIG. 1 and FIG. 4, FIG. 4 is a waveform of the touch dimming device 100 in some examples not corresponding to the claimed subject-matter but useful for the understanding thereof. In this example, during the touch period Pt, the touch dimming device 100 operates in the first state; during the dimming period Pd, the touch dimming device 100 operates in the second state. In other words, during the dimming period Pd, the third electrode E3 receives the dimming voltage Vp, but the first electrode E1 and the second electrode E2 stop receiving the driving voltage Tx and the sensing voltage Rx. During this period (i.e., the dimming period Pd), the touch panel 110 will temporarily not perform touch detection, and the voltage difference between the dimming voltage Vp and the sensing voltage Rx is used for dimming operation.

Similarly, during another period (i.e., the touch period Pt), the third electrode E3 stops receiving the dimming voltage Vp, and the first electrode E1 and the second electrode E2 normally receive the driving voltage Tx and the sensing voltage Rx. At this time, the active color changing film 120 will maintain the light transmittance as when the active color changing film 120 is not electrically conductive.

In some examples, the operating state of the touch dimming device 100 (i.e., operating in the dimming period Pd or the touch period Pt) can be manually switched by the user. In some other examples, the touch dimming device 100 can also be switched between the first state (the touch period Pt) and the second state (the dimming period Pd) in sequence, and the time of the second state (the dimming period Pd) is much longer than the time of the first state (the touch period Pt). Accordingly, due to the impact of the persistence of vision, for the user, the active color changing film 120 still maintains a color changing state as when electrically conductive, and the touch dimming device 100 still has a touch detection function.

In addition, as mentioned above, in some embodiments, the dimming voltage Vp may be an AC signal, and the peak voltages of the dimming voltage Vp correspond to each other, as shown in FIG. 5, which shows an example not corresponding to the claimed subject-matter but useful for the understanding thereof. The frequency of the dimming voltage Vp is between 100 Hz and 30,000 Hz.

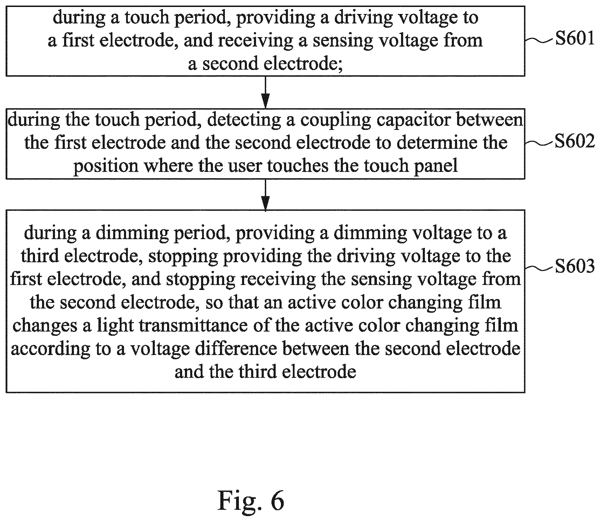

Referring to FIG. 1 and FIG. 6, FIG. 6 is a flowchart diagram of the touch dimming method in some examples not corresponding to the claimed subject-matter but useful for the understanding thereof. In step S601, during the touch period Pt, the control circuit 130 provides the driving voltage Tx to the first electrode E1 and receives the sensing voltage Rx from the second electrode E2. In step S602, during the touch period Pt, the control circuit 130 detects the coupling capacitance between the first electrode E1 and the second electrode E2 (e.g., detects the change of the sensing voltage Rx to determine the change of the capacitor value) to determine where the user touches the touch panel 110. At this time, the control circuit 130 does not provide voltage to the third electrode E3 (or the third electrode E3 is connected to ground).

In step S603, when operating in the dimming period Pd, the control circuit 130 provides the dimming voltage Vp to the third electrode E3, stops providing the driving voltage Tx to the first electrode E1, and stops receiving the sensing voltage Rx from the second electrode E2, so that the active color changing film 120 changes the light transmittance of the polymer layer 121 in the active color changing film 120 according to the voltage difference between the second electrode E2 and the third electrode E3.

The touch dimming method in FIG. 6 corresponds to the signal waveforms in FIG. 4 and FIG. 5. According to the invention, the operating state of the touch dimming device 100 is not be divided into different timings, so the touch dimming device 100 always maintains the touch function. In other words, as shown in FIG. 3, the touch dimming device 100 always provides the driving voltage Tx to the first electrode E1 and receives the sensing voltage Rx from the second electrode E2. When the touch dimming device 100 stops providing the dimming voltage Vp to the third electrode E3, the touch dimming device 100 still continuously provides the driving voltage Tx to the first electrode E1 and continuously receives the sensing voltage Rx from the second electrode E2.

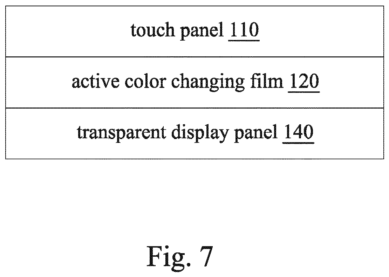

In the above embodiment, the touch dimming device 100 is combined with the transparent substrate (e.g., glass) for application in vehicle systems or other devices, but the present invention is not limited to this. FIG. 7 is a schematic diagram of a touch dimming device in some embodiments of the present invention. In this embodiment, the touch panel 110 and the active color changing film 120 are arranged on one side of a transparent display panel 140. The transparent display panel 140 is configured to receive a display signal to control multiple pixel units to present a display screen.

## Claims

1. A touch dimming device (100), comprising:
a touch panel (110) comprising a first electrode (E1) and a second electrode (E2), wherein the touch panel (110) is configured to perform touch detection according to a coupling capacitance between the first electrode (E1) and the second electrode (E2);
an active color changing film (120) comprising a third electrode (E3) and a polymer layer (121); and
a control circuit (130) electrically connected to the touch panel (110) and to the active color changing film (120), **characterised in that** the control circuit (130) is configured for:
- continuously providing a driving voltage (Tx) to the first electrode (E1) and continuously receiving a sensing voltage (Rx) from the second electrode (E2);
- detecting a coupling capacitance between the first electrode (E1) and the second electrode (E2) based on the sensing voltage (Rx) received from the second electrode (E2); and
- providing a dimming voltage (Vp) to the third electrode (E3),
and **in that** the polymer layer (121) is configured to change a light transmittance of the active color changing film (120) according to a voltage difference between the sensing voltage (Rx) received from the second electrode (E2) and the dimming voltage (Vp) provided to the third electrode (E3).

2. The touch dimming device (100) of claim 1, wherein the active color changing film (120) is configured to receive the dimming voltage (Vp) through the third electrode (E3), and a ratio between the dimming voltage (Vp) and the driving voltage (Tx) is between 1.2-20.

3. The touch dimming device (100) of claim 2, wherein the dimming voltage (Vp) is an alternating current signal, and a frequency of the dimming voltage (Vp) is between 100 Hz and 30,000 Hz.

4. The touch dimming device (100) of one of claims 2 or 3, wherein the driving voltage (Tx) comprises a plurality of scanning signals, and a frequency of the driving voltage (Tx) is between 30 Hz and 1000 Hz.

5. The touch dimming device (100) of claim 4, wherein a frequency of each of the plurality of scanning signals is between 10,000 Hz and 500,000 Hz.

6. The touch dimming device (100) of one of the preceding claims, wherein the polymer layer (121) comprises a plurality of liquid crystal particles (121a), and the plurality of liquid crystal particles (121a) are dispersed on a polymer film or distributed in a polymer network structure.

7. The touch dimming device (100) of one of the preceding claims, comprising:
a transparent display panel (140) arranged on a side of the active color changing film (120) and configured to receive a display signal to present a display screen.

8. A touch dimming method, comprising:
providing (S601) a driving voltage (Tx) to a first electrode (E1) and receiving a sensing voltage (Rx) from a second electrode (E2);
detecting (S602) a coupling capacitance between the first electrode (E1) and the second electrode (E2);
providing a dimming voltage (Vp) to a third electrode (E3), so that an active color changing film (120) changes a light transmittance of the active color changing film (120) according to a voltage difference;
**characterised in that** the voltage difference is a voltage difference between the second electrode (E2) and the third electrode (E3); and
**in that** the method further comprises, when stopping providing the dimming voltage (Vp) to the third electrode (E3), continuously providing the driving voltage (Tx) to the first electrode (E1) and continuously receiving the sensing voltage (Rx) from the second electrode (E2).

9. The touch dimming method of claim 8, wherein the driving voltage (Tx) comprises a plurality of scanning signals, a frequency of the driving voltage (Tx) is between 30 Hz and 1000 Hz, and a frequency of each of the plurality of scanning signals is between 10,000 Hz and 500,000 Hz.

## Patentansprüche

1. Berührungsdimmvorrichtung (100), die Folgendes umfasst:
ein Berührungsfeld (110), das eine erste Elektrode (E1) und eine zweite Elektrode (E2) umfasst, wobei das Berührungsfeld (110) dazu konfiguriert ist, eine Berührungsdetektion gemäß einer Kopplungskapazität zwischen der ersten Elektrode (E1) und der zweiten Elektrode (E2) durchzuführen;
einen aktiven Farbwechselfilm (120), der eine dritte Elektrode (E3) und eine Polymerschicht (121) umfasst; und
eine Steuerschaltung (130), die elektrisch mit dem Berührungsfeld (110) und dem aktiven Farbwechselfilm (120) verbunden ist, **dadurch gekennzeichnet, dass** die Steuerschaltung (130) konfiguriert ist zum:
- kontinuierlichen Bereitstellen einer Antriebsspannung (Tx) an die erste Elektrode (E1) und kontinuierlichen Empfangen einer Erfassungsspannung (Rx) von der zweiten Elektrode (E2);
- Detektieren einer Kopplungskapazität zwischen der ersten Elektrode (E1) und der zweiten Elektrode (E2) basierend auf der Erfassungsspannung (Rx), die von der zweiten Elektrode (E2) empfangen wird; und
- Bereitstellen einer Dimmspannung (Vp) an die dritte Elektrode (E3),
und dadurch, dass die Polymerschicht (121) dazu konfiguriert ist, eine Lichtdurchlässigkeit des aktiven Farbwechselfilms (120) gemäß einer Spannungsdifferenz zwischen der Erfassungsspannung (Rx), die von der zweiten Elektrode (E2) empfangen wird, und der Dimmspannung (Vp), die an die dritte Elektrode (E3) bereitgestellt wird, zu ändern.

2. Berührungsdimmvorrichtung (100) nach Anspruch 1, wobei der aktive Farbwechselfilm (120) dazu konfiguriert ist, die Dimmspannung (Vp) durch die dritte Elektrode (E3) zu empfangen, und ein Verhältnis zwischen der Dimmspannung (Vp) und der Antriebsspannung (Tx) zwischen 1,2-20 liegt.

3. Berührungsdimmvorrichtung (100) nach Anspruch 2, wobei die Dimmspannung (Vp) ein Wechselstromsignal ist und eine Frequenz der Dimmspannung (Vp) zwischen 100 Hz und 30.000 Hz liegt.

4. Berührungsdimmvorrichtung (100) nach einem der Ansprüche 2 oder 3, wobei die Antriebsspannung (Tx) eine Mehrzahl von Abtastsignalen umfasst und eine Frequenz der Antriebsspannung (Tx) zwischen 30 Hz und 1000 Hz liegt.

5. Berührungsdimmvorrichtung (100) nach Anspruch 4, wobei eine Frequenz jedes der Mehrzahl von Abtastsignalen zwischen 10.000 Hz und 500.000 Hz liegt.

6. Berührungsdimmvorrichtung (100) nach einem der vorhergehenden Ansprüche, wobei die Polymerschicht (121) eine Mehrzahl von Flüssigkristallpartikeln (121a) umfasst und die Mehrzahl von Flüssigkristallpartikeln (121a) auf einem Polymerfilm dispergiert oder in einer Polymernetzwerkstruktur verteilt sind.

7. Berührungsdimmvorrichtung (100) nach einem der vorhergehenden Ansprüche, umfassend:
ein transparentes Anzeigefeld (140), das auf einer Seite des aktiven Farbwechselfilms (120) angeordnet und konfiguriert ist, um ein Anzeigesignal zu empfangen, um einen Anzeigebildschirm darzustellen.

8. Berührungsdimmverfahren, das Folgendes umfasst:
Bereitstellen (S601) einer Antriebsspannung (Tx) an eine erste Elektrode (E1) und Empfangen einer Erfassungsspannung (Rx) von einer zweiten Elektrode (E2);
Detektieren (S602) einer Kopplungskapazität zwischen der ersten Elektrode (E1) und der zweiten Elektrode (E2);
Bereitstellen einer Dimmspannung (Vp) an eine dritte Elektrode (E3), so dass ein aktiver Farbwechselfilm (120) eine Lichtdurchlässigkeit des aktiven Farbwechselfilms (120) gemäß einer Spannungsdifferenz ändert;
**dadurch gekennzeichnet, dass** die Spannungsdifferenz eine Spannungsdifferenz zwischen der zweiten Elektrode (E2) und der dritten Elektrode (E3) ist; und
dass das Verfahren ferner, wenn das Bereitstellen der Dimmspannung (Vp) an die dritte Elektrode (E3) gestoppt wird, das kontinuierliche Bereitstellen der Antriebsspannung (Tx) an die erste Elektrode (E1) und das kontinuierliche Empfangen der Erfassungsspannung (Rx) von der zweiten Elektrode (E2) umfasst.

9. Berührungsdimmverfahren nach Anspruch 8, wobei die Antriebsspannung (Tx) eine Mehrzahl von Abtastsignalen umfasst, eine Frequenz der Antriebsspannung (Tx) zwischen 30 Hz und 1000 Hz liegt und eine Frequenz jedes der Mehrzahl von Abtastsignalen zwischen 10.000 Hz und 500.000 Hz liegt.

## Revendications

1. Dispositif de gradation tactile (100), comprenant :
un panneau tactile (110) comprenant une première électrode (E1) et une deuxième électrode (E2), dans lequel le panneau tactile (110) est configuré pour effectuer une détection tactile en fonction d'une capacité de couplage entre la première électrode (E1) et la deuxième électrode (E2) ;
un film de changement de couleur actif (120) comprenant une troisième électrode (E3) et une couche de polymère (121) ; et
un circuit de commande (130) connecté électriquement au panneau tactile (110) et au film de changement de couleur actif (120), **caractérisé en ce que** le circuit de commande (130) est configuré pour :
- fournir en continu une tension d'attaque (Tx) à la première électrode (E1) et recevoir en continu une tension de détection (Rx) de la deuxième électrode (E2) ;
- détecter une capacité de couplage entre la première électrode (E1) et la deuxième électrode (E2) sur la base de la tension de détection (Rx) reçue de la deuxième électrode (E2) ; et
- fournir une tension de gradation (Vp) à la troisième électrode (E3),
et **en ce que** la couche de polymère (121) est configurée pour changer une transmittance de lumière du film de changement de couleur actif (120) en fonction d'une différence de tension entre la tension de détection (Rx) reçue de la deuxième électrode (E2) et la tension de gradation (Vp) fournie à la troisième électrode (E3).

2. Dispositif de gradation tactile (100) selon la revendication 1, dans lequel le film de changement de couleur actif (120) est configuré pour recevoir la tension de gradation (Vp) à travers la troisième électrode (E3), et un rapport entre la tension de gradation (Vp) et la tension d'attaque (Tx) est compris entre 1,2 et 20.

3. Dispositif de gradation tactile (100) selon la revendication 2, dans lequel la tension de gradation (Vp) est un signal de courant alternatif, et une fréquence de la tension de gradation (Vp) est comprise entre 100 Hz et 30 000 Hz.

4. Dispositif de gradation tactile (100) selon l'une des revendications 2 ou 3, dans lequel la tension d'attaque (Tx) comprend une pluralité de signaux de balayage, et une fréquence de la tension d'attaque (Tx) est comprise entre 30 Hz et 1000 Hz.

5. Dispositif de gradation tactile (100) selon la revendication 4, dans lequel une fréquence de chacun de la pluralité de signaux de balayage est comprise entre 10 000 Hz et 500 000 Hz.

6. Dispositif de gradation tactile (100) selon l'une des revendications précédentes, dans lequel la couche de polymère (121) comprend une pluralité de particules de cristaux liquides (121a), et la pluralité de particules de cristaux liquides (121a) sont dispersées sur un film de polymère ou distribuées dans une structure de réseau polymère.

7. Dispositif de gradation tactile (100) selon l'une des revendications précédentes, comprenant :
un panneau d'affichage transparent (140) agencé sur un côté du film de changement de couleur actif (120) et configuré pour recevoir un signal d'affichage pour présenter un écran d'affichage.

8. Procédé de gradation tactile, comprenant :
fournir (S601) une tension d'attaque (Tx) à une première électrode (E1) et recevoir une tension de détection (Rx) d'une deuxième électrode (E2) ;
détecter (S602) une capacité de couplage entre la première électrode (E1) et la deuxième électrode (E2) ;
fournir une tension de gradation (Vp) à une troisième électrode (E3), de sorte qu'un film de changement de couleur actif (120) change une transmittance de lumière du film de changement de couleur actif (120) en fonction d'une différence de tension ;
**caractérisé en ce que** la différence de tension est une différence de tension entre la deuxième électrode (E2) et la troisième électrode (E3) ; et
**en ce que** le procédé comprend en outre, lors de l'arrêt de la fourniture de la tension de gradation (Vp) à la troisième électrode (E3), fournir en continu la tension d'attaque (Tx) à la première électrode (E1) et recevoir en continu la tension de détection (Rx) de la deuxième électrode (E2).

9. Procédé de gradation tactile selon la revendication 8, dans lequel la tension d'attaque (Tx) comprend une pluralité de signaux de balayage, une fréquence de la tension d'attaque (Tx) est comprise entre 30 Hz et 1000 Hz, et une fréquence de chacun de la pluralité de signaux de balayage est comprise entre 10 000 Hz et 500 000 Hz.
